(19)

Europäisches
Patentamt

European
Patent Office

Office européen
des brevets

(11) **EP 4 751 947 A1**

(12) **EUROPEAN PATENT APPLICATION**

(43) Date of publication:
03.06.2026 Bulletin 2026/23

(21) Application number: 25219128.3

(22) Date of filing: 27.11.2025

(51) International Patent Classification (IPC):
**B60G 17/06** (2006.01)      **B60G 11/26** (2006.01)
**B60G 17/056** (2006.01)

(52) Cooperative Patent Classification (CPC):
**B60G 17/06; B60G 11/265; B60G 17/056;**
B60G 2300/32; B60G 2400/102; B60G 2400/252;
B60G 2500/10; B60G 2500/11

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 02.12.2024 IT 202400027249

(71) Applicant: PRINOTH S.p.A.
**39049 Vipiteno (BZ) (IT)**

(72) Inventors:
• **SALIS, Francesco**
**39049 VIPITENO (BZ) (IT)**
• **KIRCHMAIR, Martin**
**39049 VIPITENO (BZ) (IT)**
• **PAOLETTI, Alberto**
**39049 VIPITENO (BZ) (IT)**

(74) Representative: **Studio Torta S.p.A.**
**Via Viotti, 9**
**10121 Torino (IT)**

(54) **CRAWLER VEHICLE AND CONTROL METHOD TO CONTROL SAID CRAWLER VEHICLE**

(57)    A crawler vehicle has a frame (2); two wheel assemblies (3) arranged on opposite sides of the frame (2), wherein each wheel assembly (3) comprises a drive wheel (4) and a plurality of idle wheels (5); two tracks (6), each of which is arranged around the respective wheel assembly (3); a suspension (7) comprising at least two semi-active hydraulic dampers (39), each of which has a respective variable damping coefficient, is associated with one of the wheel assemblies (3), and comprises a hydraulic cylinder (8) connecting to the frame (2) at least one of the idle wheels (5) of the respective wheel assembly (3); and a control device (9) configured to control each hydraulic damper (39) so as to adjust the respective damping coefficient.

FIG. 1

EP 4 751 947 A1

## Description

CROSS-REFERENCE TO RELATED APPLICATIONS

This patent application claims priority from Italian patent application no. 102024000027249 filed on December 2, 2024, the entire disclosure of which is incorporated herein by reference.

TECHNICAL SECTOR

The present invention relates to a crawler vehicle, preferably used for preparing ski runs, and a control method for controlling said crawler vehicle.

PRIOR ART

As known, crawler-type vehicles are commonly used to advance along off-road routes in order to transport goods or people or to carry out a wide range of different jobs, such as preparing the snow cover of ski runs or cleaning beaches, or for agricultural operations.

Generally, a crawler vehicle of the type identified above comprises a frame; a propulsion system mounted on the frame; two locomotion units, each of which is provided with a respective drive wheel driven by the propulsion system, a plurality of idle wheels, and a respective track arranged around the drive wheel and idle wheels; and a suspension, which connects the idle wheels to the frame.

As the crawler vehicle advances along an off-road route, such as on terrain or snow cover, the suspension dampens vibrations transmitted to the frame by the idle wheels and tracks in contact with the terrain or snow cover, improving the comfort of the driver and/or passengers on board the crawler vehicle and positively influencing the dynamics of the crawler vehicle.

However, since the structure of the terrain or snow cover on which the crawler vehicle advances is unpredictable and varies over time depending on the weather conditions, the frequency and amplitude of vibrations transmitted by the idle wheels to the frame are difficult to predict. Moreover, said vibrations vary depending on the travelling speed of the crawler vehicle.

As a result, the currently known suspensions are not able to optimally dampen the vibrations transmitted by the idle wheels and tracks to the frame under the various operating conditions of the crawler vehicle.

PATENT OBJECT

An aim of the present invention is to realise a crawler vehicle that mitigates the drawbacks of the prior art disclosed herein.

In accordance with the present invention, a crawler vehicle is realised, preferably for preparing ski runs, the crawler vehicle being configured to advance in a travelling direction and comprising:

- a frame;
- two wheel assemblies arranged on opposite sides of the frame, wherein each wheel assembly comprises a drive wheel and a plurality of idle wheels;
- two tracks, each of which is arranged around the respective wheel assembly;
- a suspension comprising at least two semi-active hydraulic dampers, each of which has a respective variable damping coefficient, is associated with one of the wheel assemblies, and comprises a hydraulic cylinder connecting at least one of the idle wheels of the respective wheel assembly to the frame; and
- a control device configured to control each hydraulic damper in order to adjust the respective damping coefficient.

Thanks to the present invention, it is possible to adapt the damping coefficient of each hydraulic damper to the specific operating conditions of the crawler vehicle, in particular to the characteristics of the terrain or snow cover on which the crawler vehicle advances, or to the travelling speed of the crawler vehicle.

In this way, vibrations transmitted from the wheel assemblies to the frame of the crawler vehicle can be optimally dampened to improve the dynamics of the crawler vehicle and the comfort of the driver and/or passengers of the crawler vehicle.

A further aim of the present invention is to provide a control method for controlling a crawler vehicle that mitigates the drawbacks of the prior art disclosed herein.

In accordance with the present invention, a control method is provided to control a crawler vehicle as described above, the control method comprising the steps of:

- detecting an acceleration signal indicative of the acceleration of the frame in a direction substantially perpendicular to the travelling direction of the crawler vehicle;
- detecting a stroke signal indicative of a length of one of the hydraulic cylinders; and
- adjusting the damping coefficient of the hydraulic damper comprising said hydraulic cylinder as a function of the detected acceleration signal and the detected stroke signal.

Thanks to this method, it is possible to control each hydraulic damper in real time and automatically in order to optimise the damping of vibrations transmitted by the wheel assemblies to the frame of the crawler vehicle under all operating conditions.

BRIEF DESCRIPTION OF THE DRAWINGS

Further features and advantages of the present invention will become clear from the following description of a non-limiting embodiment thereof, with reference to the accompanying Figures, wherein:

- Figure 1 is a plan view, with parts removed for clarity and parts schematised, of a crawler vehicle made in accordance with the present invention;
- Figure 2 is an enlarged plan view, with parts removed for clarity and parts schematised, of a detail of the crawler vehicle in Figure 1;
- Figure 3 is a schematised view, with parts removed for clarity, of a further detail of the crawler vehicle in Figure 1; and
- Figure 4 is a flow chart of a control method of the crawler vehicle of Figure 1.

## DETAILED DESCRIPTION OF THE FIGURES

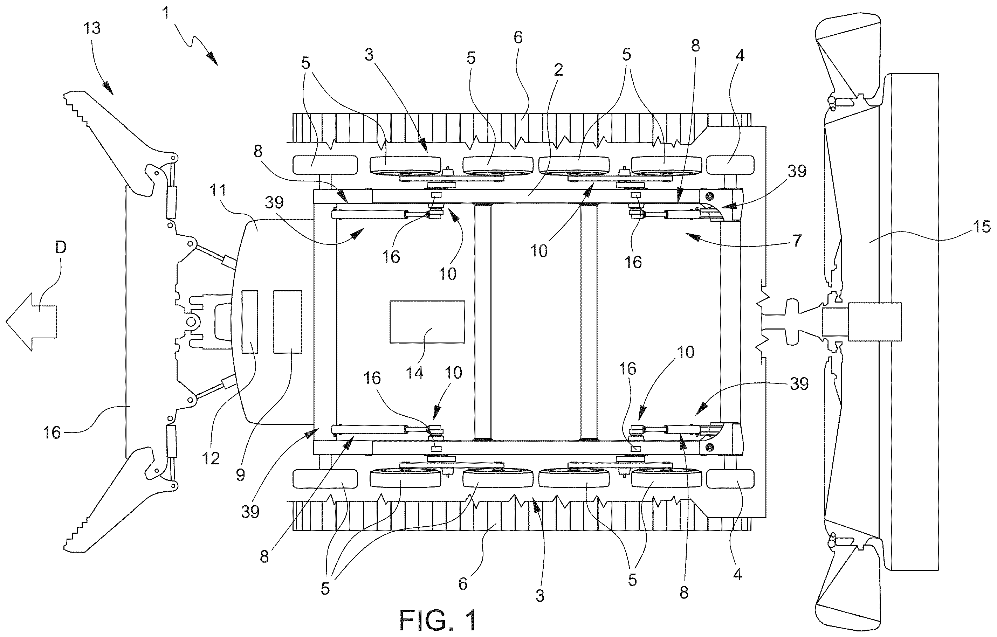

With reference to Figure 1, number 1 denotes a crawler vehicle, which in the case illustrated is used to prepare ski runs. In particular, the crawler vehicle 1 is a snow groomer.

In more detail, the crawler vehicle 1 is used for preparing alpine ski runs, and/or cross-country ski runs, and/or ski-jumping ramps, and/or "half-pipe" ski runs, and/or "snow-parks".

In accordance with a further embodiment, the crawler vehicle 1 can be used for the maintenance of sandy expanses, such as beaches, or for operations in agriculture, such as harvesting and/or handling of agricultural products and/or forage silage and/or harvesting and/or handling of bagasse.

In addition, in accordance with a further embodiment not shown in the attached figures, the crawler vehicle 1 comprises a mulcher preferably positioned at the front of crawler vehicle 1 and can be used for shredding vegetation.

In accordance with the present invention, the crawler vehicle 1 is configured to advance in a travelling direction D and comprises a frame 2; two wheel assemblies 3 arranged on opposite sides of the frame 2, wherein each wheel assembly 3 comprises a drive wheel 4 and a plurality of idle wheels 5; two tracks 6, each of which is arranged around the respective wheel assembly 3; a suspension 7 comprising at least one semi-active hydraulic damper 39, which has a variable damping coefficient, is associated with one of the wheel assemblies 3, and comprises a hydraulic cylinder 8 connecting to the frame 2 at least one of the idle wheels 5 of the respective wheel assembly 3; and a control device 9 configured to control each hydraulic damper 39 so as to adjust the respective damping coefficient.

In the non-limiting embodiment of the present invention herein described and illustrated, the suspension 7 comprises four hydraulic cylinders 8, each of which connects two respective idle wheels 5 to the frame 2. In particular, two hydraulic cylinders 8 are associated with one of the wheel assemblies 3 and two further hydraulic cylinders 8 are associated with the other of the wheel assemblies 3.

In addition, the suspension 7 comprises for each hydraulic cylinder 8 a connecting assembly 10, which connects the respective hydraulic cylinder 8 to two idle wheels 5 of the respective wheel assembly 3.

In particular, the idle wheels 5 of each wheel assembly 3 are aligned with each other along a direction substantially parallel to the travelling direction D and, in this case, each wheel assembly 3 comprises five idle wheels 5.

In addition, the crawler vehicle 1 comprises a driver's cab 11 mounted on the frame 2; a user interface 12, which is arranged in the driver's cab 11 and is configured to allow control of the crawler vehicle 1 by a driver; a set of accessory devices 13 connected to the frame 2; and a propulsion system 14, for example, internal combustion or electric or hydrogen-powered, configured to transmit power to the drive wheels 4 and to power supply the set of accessory devices 13.

In the non-limiting embodiment of the present invention herein described and illustrated, the set of accessory devices 13 comprises a tiller 15, a shovel 16, and a winch (not shown in the enclosed figures). It is understood that the crawler vehicle 1 does not necessarily comprise all of the accessory devices 13 mentioned above. For example, the crawler vehicle 1 may comprise any one or two of the accessory devices 13 selected from tiller 15, shovel 16 and winch.

In particular, the crawler vehicle 1 comprises an acceleration sensor 17, which is in communication with the control device 9 and is configured to detect an acceleration signal indicative of the acceleration of the frame 2 in a direction substantially perpendicular to the travelling direction D. In greater detail, the acceleration sensor 17 is configured to detect said acceleration signal in a substantially vertical direction. As an example, the acceleration sensor 16 is an accelerometer.

In the non-limiting embodiment of the present invention herein described and illustrated, the crawler vehicle 1 comprises four acceleration sensors 17, each of which is fixed near a respective corner portion of the frame 2, at the respective connecting assembly 10.

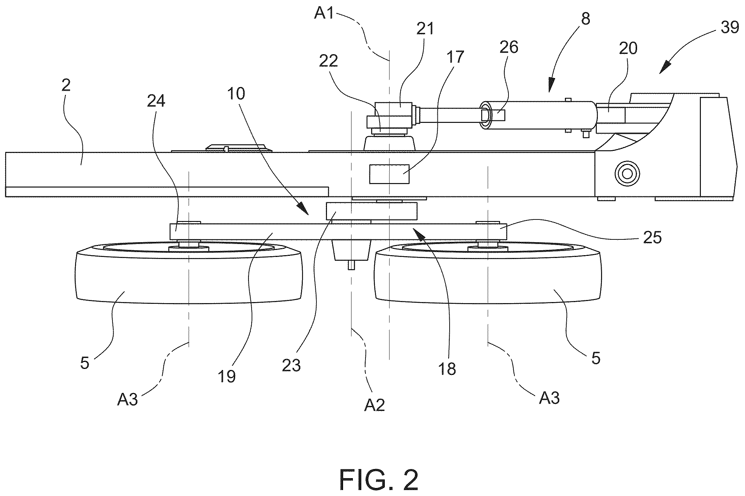

With reference to Figure 2, each connecting assembly 10 comprises a swivel arm 18, which is connected to the respective hydraulic cylinder 8 and is hinged to the frame 2; and a support crossbar 19, which is hinged to the swivel arm 18 and rotatably supports the two respective idle wheels 5.

In particular, each hydraulic cylinder 8 has a respective end 20 hinged to the frame 2 and a respective end 21 hinged to the respective swivel arm 18.

In more detail, each swivel arm 18 comprises an elongated body 22, which is hinged to the frame 2 around a rotation axis A1 and, in particular, extends through a through opening (not visible in the enclosed Figures) formed in the frame 2; and a crank 23, which is integral with the elongated body 22 and extends in a direction substantially perpendicular to the rotation axis A1.

In particular, each support crossbar 19 extends in a direction substantially perpendicular to the rotation axis A1 and is hinged at one end of the respective crank 23 about a rotation axis A2 substantially parallel to the rotation axis A1.

In more detail, each support crossbar 19 has a respective end 24 to which one of the idle wheels 5 is hinged and a respective end 25 to which another of the idle wheels 5 is hinged. In the non-limiting embodiment of the present invention herein described and illustrated, each idle wheel 5 is hinged to the support crossbar 19 about a respective rotation axis A3 substantially perpendicular to the rotation axis A2.

In addition, the crawler vehicle 1 comprises for each hydraulic cylinder 8 a stroke sensor 26, which is in communication with the control device 9 and is configured to detect a stroke signal indicative of the length of the respective hydraulic cylinder 8.

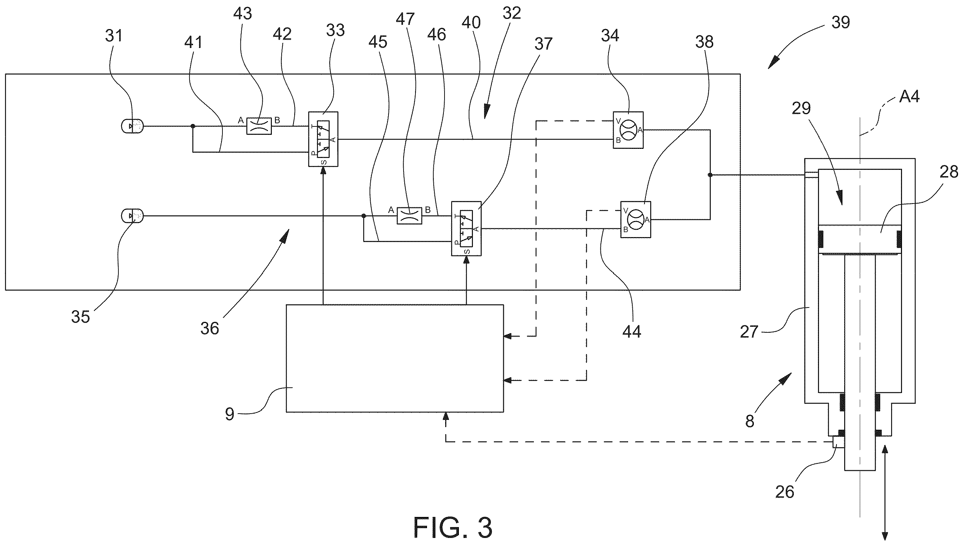

With reference to Figure 3, each hydraulic cylinder 8 extends along a respective longitudinal axis A4 for a variable length and comprises a cylindrical body 27 and a piston 28, which is engaged in the cylindrical body 27 in a sliding manner along the longitudinal axis A4 and delimits together with the cylindrical body 27 a variable volume chamber 29 configured to contain a pressurized fluid.

In the non-limiting embodiment of the present invention herein described and illustrated, each hydraulic damper 39 comprises an accumulator 31, which is arranged outside the respective hydraulic cylinder 8 and is configured to contain the pressurised fluid; a hydraulic circuit 32, which comprises a connecting duct 40 fluidically connecting the accumulator 31 to the variable volume chamber 29; and a control valve 33, which is in communication with the control device 9 and is configured to adjust a flow of fluid in the hydraulic circuit 32.

In particular, the control device 9 is configured to control the control valve 33 to adjust the damping coefficient of the respective hydraulic damper 39.

In more detail, each control valve 33 is configured to selectively allow/block a passage of a fluid flow in the connecting duct 40.

In the non-limiting embodiment of the present invention herein described and illustrated, the hydraulic circuit 32 comprises a branch 41 and a branch 42, which is arranged in parallel with the branch 41 and has a narrowing 43. The control valve 33 is of the three-way type and is controllable by the control device 9 so as to selectively assume a first configuration, wherein the control valve 33 fluidically connects the accumulator 31 to the variable volume chamber 29 via the branch 41, and a second configuration, wherein the control valve 33 fluidically connects the accumulator 31 to the variable volume chamber 29 via the branch 42.

In accordance with a variant of the present invention not shown in the accompanying Figures, instead of the narrowing 43, the branch 42 may have a blockage, which prevents the passage of fluid flow through the branch 42.

In accordance with a further embodiment, not shown in the accompanying figures, each control valve 33 comprises a plug (not shown in the accompanying figures) movable between an open position, in which the plug allows a passage of fluid flow through the control valve 33, and a closed position, in which the plug blocks a passage of fluid flow through the control valve 33. By way of example, the control valve 33 is a solenoid valve, In particular of the on-off or proportional type.

In addition, each hydraulic damper 39 comprises a pressure sensor 34, which is in communication with the control device 9 and is configured to detect a pressure signal indicative of the fluid pressure in the hydraulic circuit 32.

In the non-limiting embodiment of the present invention herein described and illustrated, each hydraulic damper 39 comprises an accumulator 35, which is arranged outside the respective cylindrical body 27 and is configured to contain the pressurised fluid; a hydraulic circuit 36, which comprises a connecting duct 44 fluidically connecting the accumulator 35 to the respective variable volume chamber 29; and a control valve 37, which is in communication with the control device 9 and is configured to adjust a fluid flow in the hydraulic circuit 36.

In practice, the connecting ducts 40 and 44 connect the accumulator 31 and accumulator 35, respectively, in parallel with the variable volume chamber 29.

In particular, the accumulator 31 comprises a first tank having a first capacity and the accumulator 35 comprises a second tank having a second capacity smaller than the first capacity.

In more detail, each accumulator 31, 35 is of the type wherein the inner space is divided by a membrane into two compartments, one of which is occupied by air or another gas, while the other compartment is occupied by the substantially incompressible hydraulic fluid. In this way, depending on the degree of filling occupied by the hydraulic fluid, it is possible to provide a certain amount of elastic rigidity to the hydraulic cylinder 8.

It is understood that, in accordance with a non-limiting embodiment, the hydraulic circuit 36 and control valve 37 are of the same type as the hydraulic circuit 32 and control valve 33 respectively.

In particular, the hydraulic circuit 36 comprises a branch 45 and a branch 46, which is arranged parallel to the branch 45 and has a narrowing 47. The control valve 37 is of the three-way type and is controllable by the control device 9 so as to selectively assume a first configuration, wherein the control valve 37 fluidically connects the accumulator 35 to the variable volume chamber 29 via the branch 45, and a second configuration, wherein the control valve 37 fluidically connects the accumulator 35 to the variable volume chamber 29 via the branch 46.

In addition, each hydraulic damper 39 comprises a pressure sensor 38, which is in communication with the control device 9 and is configured to detect a pressure signal indicative of the fluid pressure in the hydraulic circuit 36.

In accordance with variants of the present invention, not shown in the enclosed figures, each hydraulic damper 39 may be of the magnetorheological or electrorheological type. In accordance with these variants, each hydraulic damper 39 comprises a cylinder configured to contain a fluid of an electrorheological or magnetorheological type, a piston engaged in a sliding manner within said cylinder, and an electric/magnetic field generator configured to generate an electric/magnetic field in order to adjust the viscosity of the fluid of an electrorheological or magnetorheological type contained in the cylinder. In particular, each hydraulic damper 39 manufactured in accordance with said variants is without accumulators, hydraulic connection circuits and control valves.

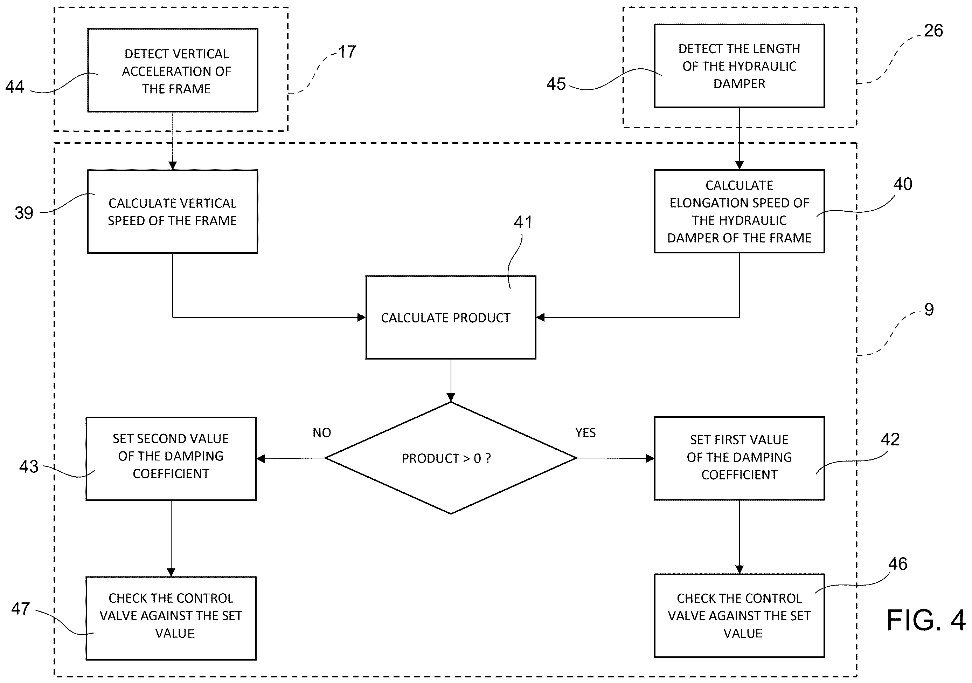

With reference to Figure 4, the control device 9 is configured to adjust each damping coefficient in real time according to the detected acceleration signal and the respective detected stroke signal.

In particular, the control device 9 is configured to calculate a speed of the frame 2 in a direction substantially perpendicular to the travelling direction D as a function of the detected acceleration signal (block 39); calculate an elongation speed of each hydraulic cylinder 8 as a function of the respective detected stroke signal (block 40); calculate a product between said speed of the frame 2 and said elongation speed (block 41); set a first value of the respective damping coefficient in the case where said product is greater than zero (block 42); and set a second value of the respective damping coefficient in the case where said product is less than or equal to zero (block 43), wherein the second value is different from the first value and, preferably, the second value is smaller than the first value.

In practice, the control device 9 is configured to control each control valve 33, 37 as a function of said set damping coefficient value.

In more detail, the control device 9 is configured to set said damping coefficient value according to a "Skyhook" control logic.

In other words:

$$c_s = \begin{cases} c_{max}, & \dot{x}_s(\dot{x}_s - \dot{x}_u) > 0 \\ c_{min}, & \dot{x}_s(\dot{x}_s - \dot{x}_u) \le 0 \end{cases}$$

wherein $c_s$ represents the damping coefficient of each hydraulic damper 39; $c_{max}$ represents the first value of the damping coefficient of each hydraulic damper 39; $c_{min}$ represents the second value of the damping coefficient of each hydraulic damper 39; $\dot{x}_s$ represents the speed of the frame 2 in a substantially vertical direction; and $(\dot{x}_s - \dot{x}_u)$ represents the elongation speed of each hydraulic cylinder 8.

In particular, when each control valve 33, 37 forces the passage of the fluid flow through the respective branch 42, 46, the damping coefficient $c_s$ assumes the first maximum value $c_{max}$. When each control valve 33, 37 allows the free passage of fluid flow in the respective hydraulic circuit 32, 36, forcing the passage of the fluid flow through the respective branches 41, 45, the damping coefficient $c_s$ assumes the second smallest value $c_{min}$.

In the non-limiting embodiment of the present invention herein described and illustrated, the control device 9 implements an on-off-type "Skyhook" control logic.

However, it is understood that, in accordance with a variant of the present invention, the control device 9 may implement a further control logic of each valve 33, 37 which allows to adjust the fluid flow in a partializable manner in the respective hydraulic circuit 32, 36. In accordance with this control logic, it is possible to adjust the value of the damping coefficient of each hydraulic damper 39.

In use and with reference to Figure 4, each acceleration sensor 17 detects an acceleration signal indicative of the acceleration of the frame 2 in a direction substantially perpendicular to the travelling direction D (block 44). At the same time, each stroke sensor 26 detects a respective stroke signal indicative of the length of the respective hydraulic cylinder 8 (block 45).

The control device 9 receives said detected acceleration signals and calculates the vertical speed of the frame 2 as a function of said acceleration signals at the position of the acceleration sensors 17 (block 39). Likewise, the control device 9 receives said detected stroke signals and calculates the extension speed of each hydraulic cylinder 8 as a function of the respective stroke signal (block 40).

At this point, the control device 9 calculates the product between each elongation speed and the corresponding speed of the frame 2 (block 41).

In case said product is greater than zero, the control device 9 sets a first value for the damping coefficient of the respective hydraulic damper 39 (block 42). In particular, in such a circumstance, the control device 9 sends a control signal to each control valve 33, 37 so as to block the passage of fluid flow of in the respective hydraulic circuit 32, 36 (block 46). In this way, the damping coefficient of the respective hydraulic damper 39 assumes a maximum value.

Conversely, if said product is lower than or equal to zero, the control device 9 sets a second value for the damping coefficient of the respective hydraulic damper 39 (block 43). In particular, in such a circumstance, the control device 9 sends a control signal to each control valve 33, 37 so as to allow the passage of fluid flow in the respective hydraulic circuit 32, 36 (block 47). In this way, the damping coefficient of the respective hydraulic damper 39 assumes a minimum value.

It is clear that variants can be made to the present invention without, however, departing from the scope of protection of the appended claims.

## Claims

1. A crawler vehicle, preferably for preparing ski runs, the crawler vehicle (1) being configured to advance in a travelling direction (D) and comprising:

   - a frame (2)
   - two wheel assemblies (3) arranged on opposite sides of the frame (2), wherein each wheel assembly (3) comprises a drive wheel (4) and a plurality of idle wheels (5);
   - two tracks (6), each of which is arranged around the respective wheel assembly (3);
   - a suspension (7) comprising at least two semi-active hydraulic dampers (39), each of which has a respective variable damping coefficient, is associated with one of the wheel assembly (3), and comprises a hydraulic cylinder (8) that connects at least one of the idle wheels (5) of the respective wheel assembly (3) to the frame (2); and
   - a control device (9) configured to control each hydraulic damper (39) so as to adjust the respective damping coefficient.

2. The crawler vehicle as claimed in claim 1, wherein the suspension (7) comprises at least two connecting assemblies (10), each of which is associated with one of the hydraulic cylinders (8) and connects the respective hydraulic cylinder (8) to two idle wheels (5) of the respective wheel assembly (3).

3. The crawler vehicle as claimed in claim 2, wherein each connecting assembly (10) comprises a swivel arm (18), which is connected to the respective hydraulic cylinder (8) and is hinged to the frame (2); and a support crossbar (19), which is hinged to the swivel arm (18) and rotatably supports the two respective idle wheels (5).

4. The crawler vehicle as claimed in any one of the foregoing claims, wherein the suspension (7) comprises four hydraulic cylinders (8), each of which connects two respective idle wheels (5) to the frame (2).

5. The crawler vehicle as claimed in any one of the foregoing claims, wherein each hydraulic cylinder (8) extends along a respective longitudinal axis (A4) for a variable length and comprises a cylindrical body (27) and a piston (28), which is engaged in the cylindrical body (27) in a sliding manner along the longitudinal axis (A4) and delimits together with the cylindrical body (27) a variable volume chamber (29) configured to contain a pressurized fluid.

6. The crawler vehicle as claimed in claim 5, and comprising an acceleration sensor (17), which is in communication with the control device (9) and is configured to detect an acceleration signal indicative of the acceleration of the frame (2) in a direction substantially perpendicular to the travelling direction (D); and at least two stroke sensors (26), each of which is in communication with the control device (9), is associated with one of the hydraulic cylinders (8), and is configured to detect a stroke signal indicative of the length of the respective hydraulic cylinder (8).

7. The crawler vehicle as claimed in claim 6, wherein the control device (9) is configured to adjust each damping coefficient as a function of the detected acceleration signal and the respective detected stroke signal.

8. The crawler vehicle as claimed in claim 7, wherein the control device (9) is configured to:
   calculate a speed of the frame (2) in a direction substantially perpendicular to the travelling direction (D) as a function of the detected acceleration signal;

   - calculate an elongation speed of one of the hydraulic cylinders (8) as a function of the respective detected stroke signal;
   - calculate a product between said speed of the frame (2) and said elongation speed;
   - set a first value of the respective damping coefficient in the case where said product is greater than zero; and
   - set a second value of the respective damping coefficient in the case where said product is less than or equal to zero, wherein the second value is different from the first value and preferably the second value is smaller than the first value.

9. The crawler vehicle as claimed in any one of claims 5 to 8, wherein each hydraulic damper (39) comprises an accumulator (31; 35), which is arranged outside the respective hydraulic cylinder (8) and is configured to contain the pressurised fluid; a hydraulic circuit (32; 36), which fluidically connects the accumulator (31; 35) to the variable volume chamber (29); and a control valve (33; 37), which is in communication with the control device (9) and is configured to adjust a flow of fluid in the hydraulic circuit (32; 36).

10. The crawler vehicle as claimed in claim 9, wherein the control device (9) is configured to control the control valve (33; 37) so as to adjust the damping coefficient of the respective hydraulic damper (39).

11. The crawler vehicle as claimed in claim 9 or 10, wherein each control valve (33; 37) is configured to selectively allow/block a passage of a fluid flow in the respective hydraulic circuit (32; 36).

12. A control method to control a crawler vehicle as claimed in any one of the foregoing claims, the control method comprising the steps of:

- detecting an acceleration signal indicative of the acceleration of the frame (2) in a direction substantially perpendicular to the travelling direction (D) of the crawler vehicle (1);
- detecting a stroke signal indicative of a length of one of the hydraulic cylinders (8); and
- adjusting the damping coefficient of the hydraulic damper (39) comprising said hydraulic cylinder (8) as a function of the detected acceleration signal and the detected stroke signal.

13. The control method as claimed in claim 12, and comprising the steps of:

- calculating a speed of the frame (2) in a direction substantially perpendicular to the travelling direction (D) as a function of the detected acceleration signal;
- calculating an elongation speed of one of the hydraulic cylinders (8) as a function of the respective detected stroke signal;
- calculating a product between said speed of the frame (2) and said elongation speed;
- setting a first value of the damping coefficient of the hydraulic damper (39) comprising said hydraulic cylinder (8) in the case where said product is greater than zero; and
- setting a second value of the damping coefficient of said hydraulic damper (39) in the case where said product is less than or equal to zero, wherein the second value is different from the first value and preferably the second value is smaller than the first value.

14. The control method as claimed in claim 12 or 13, and comprising the step of adjusting a flow of a fluid in a hydraulic circuit (32; 36), which fluidically connects a variable volume chamber (29) of one of the hydraulic cylinders (8) to an accumulator (31; 35), so as to adjust the damping coefficient of the respective hydraulic damper (39).

15. A computer program configured to control a crawler vehicle (1) and directly loadable into a memory of a computer to carry out the steps of the method of any one of claims 12 to 14 when the program is implemented by the computer.

16. A program product comprising a readable medium on which the program of claim 15 is stored.

FIG. 1

FIG. 2

FIG. 3

FIG. 4

**EP 4 751 947 A1**

# EUROPEAN SEARCH REPORT

**Application Number**

EP 25 21 9128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 513 833 A (SHELDON DANIEL F [US]) 30 April 1985 (1985-04-30) * figures 1-4 * * column 1, lines 12-14 * * column 2, lines 61-68 * * column 3, lines 11-15, 24-28, 36 - 39 * * column 5, lines 38-51 * ----- | 1,5 | INV. B60G17/06 B60G11/26 B60G17/056 |
| X | US 2021/380184 A1 (MAURER GREGOR [IT]) 9 December 2021 (2021-12-09) * figures 1-3 * * paragraphs [0002], [0024], [0037], [0039] * ----- | 1-5 | |

TECHNICAL FIELDS
SEARCHED        (IPC)

B60G

The present search report has been drawn up for all claims

| Place of search | Date of completion of the search | Examiner |
|---|---|---|
| The Hague | 15 January 2026 | Schmidt, Nico |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P04C01)

12

Europäisches
Patentamt
European
Patent Office
Office européen
des brevets

**Application Number**

EP 25 21 9128

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

Application Number

EP 25 21 9128

**LACK OF UNITY OF INVENTION**
**SHEET B**

The Search Division considers that the present European patent application does not comply with the requirements of unity of invention and relates to several inventions or groups of inventions, namely:

```
1. claims: 1-5

    Improving ground load distribution with a low-complexity
    suspension system.
                       ---

2. claims: 6-8, 12-16

    Provision of a more accurate damper control.
                       ---

3. claims: 9-11

    Provision of a compact spring-damper arrangement.
                       ---
```

## ANNEX TO THE EUROPEAN SEARCH REPORT
## ON EUROPEAN PATENT APPLICATION NO.

EP 25 21 9128

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| US 4513833 | A | 30-04-1985 | NONE | | |
| US 2021380184 | A1 | 09-12-2021 | CA | 3115436 A1 | 16-04-2020 |
| | | | CN | 111038608 A | 21-04-2020 |
| | | | EP | 3863913 A1 | 18-08-2021 |
| | | | US | 2021380184 A1 | 09-12-2021 |
| | | | WO | 2020075136 A1 | 16-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000027249